# EUROPEAN PATENT SPECIFICATION

(11) **EP 3 830 028 B1**
(45) Date of publication and mention of the grant of the patent: **12.10.2022**
(21) Application number: 18750380.0
(22) Date of filing: 30.07.2018
(51) Int. Cl.: C01B 17/54, F23D 11/00, F23D 14/00, F23C 5/08

(54) **PROCESS AND PLANT FOR THE COMBUSTION OF SULFUR TO SULFUR DIOXIDE**
VERFAHREN UND ANLAGE ZUR VERBRENNUNG VON SCHWEFEL ZU SCHWEFELDIOXID
PROCÉDÉ ET INSTALLATION POUR LA COMBUSTION DE SOUFRE EN DIOXYDE DE SOUFRE

(43) Date of publication of application: 09.06.2021
(73) Proprietor: Metso Outotec Finland Oy, 33900 Tampere (FI)
(72) Inventor: DAUM, Karl-Heinz, 65549 Limburg (DE); STORCH, Hannes, 61381 Friedrichsdorf (DE); BRÄUNER, Stefan, 60486 Frankfurt am Main (DE)
(74) Representative: Keil & Schaafhausen Patentanwälte PartGmbB
(86) International application number: PCT/EP2018/070636
(87) International publication number: WO 2020/025105

(56) References cited:
- CA-A- 1 237 573
- US-A- 3 879 523
- US-A- 3 879 523
- US-A- 3 936 275
- US-B1- 6 203 314
- US-B1- 6 203 314
- US-B2- 8 518 366

## Description

The invention belongs to a reactor for the combustion of sulfur whereby the reactor's walls form a symmetrical base area (b), whereby at least two burners are mounted, each with a burner holding device, whereby all burner holding devices have the same distance to each other and each burner holding device has the same distance to the a center point (z) of the base area (b).

The process for manufacturing sulfuric acid is well-known for decades. Thereby, sulfur is burned to sulfur dioxide (SO₂), which is afterwards further oxidized to sulfur trioxide (SO₃) by heterogeneous catalytic reaction. The resulting sulfur trioxide is absorbed in concentrated sulfuric acid, with addition of water it is finally converted into sulfuric acid (H₂SO₄). The source of the required oxygen for the combustion of sulfur can either be air or oxygen enriched air, or else pure oxygen.

In detail, liquid sulfur is transported via lines to at least one burner, wherein it is mixed with an oxygen containing gas, e.g. air, which is transported therein via lines. The burner(s) is/are firing into a furnace, typically lined with multi-layer refractory bricks. In the furnace, SO₂-containing gas is formed according to the reaction in an adiabatic combustion:

S+O₂→SO₂ ; ΔH ~ -297 kJ/mol

In the known process, the oxidation of sulfur takes place inside the furnace, where the sulfur is sprayed in or atomized by other means, e.g. spray nozzles or specific burners as it can e.g. be found in EP 2 627 949.

Due to droplet size and prevailing combustion temperature, a certain residence time is required for a complete evaporation of said droplets and subsequent oxidation. Thereby, the reaction is limited by mass transport phenomena only which is why that is rather important to provide a complete mixing of sulfur and oxygen supplied to the reactor.

Typically, an adiabatic combustion temperature above 1.000°C results as a function of the ratio of sulfur to combustion air. Further, a standard sulfur-burning unit employs a waste heat boiler (WHB) to recover the excess of energy from the system. Typically, a fire tube boiler is installed downstream the combustion furnace to cool the combustion gas down to typical values between 400 and 500 °C while generating high-pressure steam.

Typically, when applying fire tube boilers, the plant capacity of the described process is limited due to two reasons.

First, the gas temperature is limited to -1200 °C as the hot tube sheet (gas entry side of the waste heat boiler) cannot stand higher temperature without the risk of local material overheating. The hot gas is fed through the tubes, while high-pressure water/steam is present at the shell side. At a very large plant size, this results also in a very large diameter of the fire tube boiler shell and hence due to the steam pressue the mechanical design requires excessively large wall thicknesses of this shell and tube sheets.

Further, in this context the use of higher steam pressures is particularly critical. At a large plant size of typically 5,000 mtpd (metric ton per day), any substantial further increase in steam pressure from currently typical 65 bar to say 100 bar, cannot be accommodated by the fire tube design. However, as the product steam is preferably used to be fed to a steam turbine generator, a higher steam pressure is desired, as it offers the advantage of an increased thermal efficiency there.

Second, with regard to the sulfur combustion furnaces it is to say that they are typically are horizontal vessels lined with multi-layer refractory material. The quality and design of the refractory material depends on operating conditions, like the adiabatic combustion temperature. Typically, the required specific volumetric heat rate is in the range of 300,000 to 3,000,000 kcal/m³ of furnace volume.

US 3,936,275 discloses a method and an apparatus adapted to the combustion of sulfur at high sulfur flow rates, whereby it is directed to a single burner and its specific design. Thereby, the burner comprises a combustion chamber of a general cylindrical configuration with thermally insulated lateral walls by means of a refractory liner or filler. A conical wall delimits the one end of the chamber, with a spraying device for the introduction of liquid sulfur and primary combustion air located at its apex. At the opposite end of the combustion chamber, an opening enables the passage of the SO₂ containing gases. A boiler allows taking advantage of the heat available in the exhaust gases.

US 8,518,366 B2 describes a process and a device for burning sulfur and/or sulfur-containing gases are disclosed achieving exhaust gases with a high SO₂ concentration. The combustion apparatus features successively following combustion zones, whereby one or more sulfur containing compounds are introduced in each of these zones. No details regarding burner arrangements are given.

Further document CA 1 237 573 A is directed to a combined sulfur burning furnace and water-cooled boiler arrangement for producing a cooled, gaseous SO₂-air mixture. Said arrangement comprises a single sulfur burning means to provide an upwardly directed axial flow of a hot, gaseous sulfur dioxide-air mixture within said external shell. Furthermore, it shows a plurality of water-cooled boiler tubes within said external shell and which are arranged such to permit said radial outflow of said gaseous mixture from an upper inner chamber to an upper outer chamber and to effect cooling of said gaseous mixture; and cooled gaseous mixture exit means.

US 6,203,314 is dealing with a more detailed arrangement of a plurality of burners, but on the other side, is not explicitly directed to sulfur burning. Between a pair of these burners, an oxidizer lance is positioned, having a lance axis substantially coplanar to the burner axis. The angle between the axes of the combustion assembly and horizontal plane is between -25° and +25°. Thus, an advantageous temperature profile is created limiting flame temperature peaks and emission of NOₓ.

With very large plant capacities, the size of those furnaces can become extremely large. In this context, restrictions are given by the weakening integrity of the brick-lining at larger furnace diameters, particularly with regard to circumferential compression stress and/or an increasingly unstable horizontal cylindrical shape, making this design potentially unsustainable. In addition, the length of a furnace is limited with regard to brick-lining, since different thermal expansions and its compensation are becoming more difficult. A high specific heat rate can minimize the problem by leading to a smaller furnace size, but also presents restrictions in terms of homogeneous/uniform distribution of the atomized sulfur and the required thorough mixing of gases.

Although it is possible to realise large plant output capacities by multiple parallel combustion furnaces and waste heat boiler units, significantly larger single units will be required in the future to reduce investment costs and increase energy efficiency.

Therefore, it is the object underlying the current invention to prove an arrangement of burner(s), furnace and associated waste heat boiler, which enables practically unlimited plant capacities.

Said task is solved with a device with the features according to claim 1.

The reactor is envisaged to be a water-tube-type waste heat boiler, characterized by the high-pressure water/steam circulating within the wall tubes (as opposed to a fire-tube-type boiler). It is also preferred to burn the sulfur with an appropriate ratio of air to achieve an adiabatic combustion temperature of 1500 to 2000°C, - significantly higher as compared to conventional plants. Simultaneously an overall smaller flow of combustion gas will result, enabling the vessel/reactor to be substantially reduced in size/diameter. Thus, the lower part of the waste heat boiler does not contain convection surfaces, but said walls are only exposed to radiation. Once the original combustion gas temperature is reduced (by radiation based heat transfer to the wall), the upper part of the waste heat boiler will then also contain convection heat transfer surfaces, while the wall will extend the entire length of the vessel.

Such a reactor for the combustion of sulfur comprises walls, which form a symmetrical ground plan / base area. Within the reactor, at least two burners are mounted, each with a burner holding device. The burner holding devices are mounted symmetrically to each other on the walls of the combustion chamber. The distance between each burner holding device is identical. In addition, each burner holding device shall have the same distance from the centre of the combustion base area.

The decisive factor is that the at least one of the burner holding devices are designed so that it can by design be adjusted such that the relating flame shows an angle α between 0 and 45°, preferably 2 and 15° relative to the lateral centre point axis. The centre axis is the axis, which forms the direct connection between the centre of the burner holding device and the centre of the base area.

Therefore, the burners can be adjusted by design in such a way that the hottest point of the combustion chamber is no longer in the centre of the base area. It is important, however, to create an asymmetrical temperature profile within the reactor, -with regard to the centre of the base area. This asymmetrical temperature profile leads to a gas flow that promote a better mixing of the gas on the one hand, but on the other hand it enables also better heat dissipation to the downstream convection surface. As a result, it is also possible to design and build a sulfur burning system without any brick lined furnace and replacing the traditional fire tube boiler with water tube boiler. This combustion reactor, essentially designed as industrially well proven water tube boiler, combined with a multitude of burners, is suitable for unlimited plant sizes. Compare the use of this concept exclusively in power generation plants with even larger thermal capacities and operating pressures. Thereby, the limiting factors discussed above are omitted.

A preferred design of the invention is that the base of the reactor is designed as a square or circle, which ensures the simplest possible design and thus the simplest possible and most economic manufacturing.

Another advantage is that the base area is a polygon with at least six sides, the number of sides being identical or a multiple of the number of burners, preferably multiplied with one or two, in order to ensure a symmetrical distribution of the burners with equal distances between each burner device. This is especially preferred if the number of sides corresponds to the number of burners. That specific design enables a modular design.

It is also preferred to have at least three burners. An increased number of burners makes it possible to increase the plant capacity further.

Another advantageous design of the invention provides for a so-called convection area above/around the burning area, wherein heat transfer at the lower part is dominated by radiation, in which the gas flow mixes further. This reliably prevents heat backflow.

Moreover, it had turned out to be favourable if the walls are at least partly designed as membrane walls. A membrane wall is a wall made of tubes, which at least partially surrounds the combustion chamber. A heat transfer medium can be passed through the tubes, e.g. a water/steam mixture. Summing up, the reactor wall is an integral part of a water-tube-type waste heat boiler and consists of a multitude of preferably vertical tubes containing the water/steam mixture of the waste heat boiler internal circulation water, with welded fins on each opposite side of the tube, to be connected (welded) to the neighboring tubes, and thereby forming a membrane wall construction.

To withstand the high gas temperatures and protect the furnace part, the membrane wall shell may be cladded inside with a thin layer of refractory castable material. Not only may this protect the said wall (and bottom) from undesired contact with un-evaporated sulfur droplets, the cooled wall also significantly lowers the inner surface temperature of the refractory material and renders it to the use of castable material. No separate horizontal or vertical furnace is required. The height of the combustion part, i.e. the said castable protection is determined by the required residence time for the sulfur droplets to be completely evaporated. So, the downstream convection heat transfer section will not be exposed to un-evaporated sulfur.

A disadvantage of the burner installed in a separate brick lined furnace is, that it must be removed from the furnace once the plant trips or is temporarily off-line, i.e. otherwise the burner is exposed to the hot furnace radiation without cooling, which can lead to mechanical damage or deformation of the burner spinning cup or conventional spray nozzles. Hence, the removal of the burner is time-critical.

With this invention, without or through the application of castable material, which is cooled by the membrane wall, the surface temperature and hence remaining radiation after shutdown is significantly lower/smaller as compared to the traditional refractory of a separate furnace. Once the combustion is ceased, the combustion chamber cools down very fast, eventually approaching the membrane temperature. Compare the traditional furnace temperature of -1600 °C, with the membrane-wall (plus castable as the case may be) temperature of well below~500 °C. So, a fast removal of the burner(s) from the furnace is not longer necessary.

A complete design of the reactor with a membrane wall is also favourable, in order to remove a great deal of heat from the system at an early stage via radiation. Preferably, the outer shell of the furnace and the downstream convection boiler elements is designed as an integral continuous full-length membrane wall with water/steam circulating through the vertical boiler tubes and thus providing cooling to the internals.

The inner diameter of the reactor is such, that it is larger than the length of the combustion flame and hence renders itself perfectly for side arrangement of the sulfur burners, even at much smaller acid plant sizes as compared to the above-mentioned 5,000 mtpd capacity, but also preferably for much larger plant capacities.

Normally, one heat exchanger, designed as convection heat transfer area is installed inside the reactor downstream the burner section. However, it is also preferred to use two such heat exchangers. Between both, an additional injection of oxygen or additional burners can be situated. Thereby, part of the combustion can be re-located which also gives the possibility of a more homogenous heat profile.

By the arrangement of a 2-stage combustion system, the reactor will enable the first combustion unit step to be operated in a sub-stoichiometric regime (with regard to oxygen) and thus renders the formation of NOx less favourable. As the latter is at least partially absorbed at the acid, it is a non-desired impurity.

Another special design of the invention envisages that at least one control unit is provided, which adjusts the burner within the angle α on the basis of the measured temperatures in such a way that the heat profile is as homogeneous as possible, whereby this adjustment takes place on the basis of a stored experimentally determined matrix.

Temperature measurement within the heat exchanger is particularly preferred, so that it is also relatively possible in practice to convey a heat profile due to the already lowered temperatures. This resolution can take place both over the base area of the heat exchanger and along a path through the flow direction, preferably in all three dimensions.

Finally, the invention also includes a process for the combustion of sulfur with the characteristics of claim 8.

In such a process, sulfur is burned with at least two burners. These burners being mounted on the walls of a combustion chamber which describe a symmetrical ground plan. The burners are adjustable by design with regard to their flame direction via their respective burner mounting devices in such a way that an angle α between 0° and 45 °, preferably 2° to 15 ° to the axis of the shortest connection between burner device and centre of the base area described by the walls of the combustion chamber has.

Summing up, the current invention offers the following advantages:
1. No size limit of the combustion furnace, i.e. non-existing separate furnace.
2. Use of membrane walls of the reactor is possible based on good sulfur atomization, which in turn minimizes the risk of sulfur droplets meeting the membrane wall. Therefore the said castable cladding can be omitted, -or, for peace of mind, be installed despite the low risk
3. No differential expansions between furnace and waste heat boiler, less interface stress in case of a design without brick lining.
4. Practically unlimited number of burners can be arranged at the furnace/ waste heat boiler circumference and, therefore, no limitation in plant size capacity with regard to sulfur combustion.
5. Virtually unlimited steam pressure at the waste heat boiler and hence potential of substantially better thermal efficiency.
6. Shape of furnace/reactor and waste heat boiler can be either circular or e.g. square / hexagonal / octagonal, subject to manufacturing preferences and inner process gas pressure.
7. High SO₂ concentrations of the combustion gas can be achieved when using oxygen enriched air well beyond the concentration limited by the 20.9% oxygen content of the ambient air.

Additional features, advantages and possible applications of the invention are derived from the following description of exemplary embodiments and the drawings. All the features described and/or illustrated graphically here form the subject matter of the invention, either alone or in any desired combination, regardless of how they are combined in the claims or in their references back to preceding claims.

The drawings show schematically:
- Fig. 1a: shows schematically a first industrially proven arrangement for sulfur combustion, comprising a brick-lined vertical combustion chamber (4) connected to the waste heat boiler located at the top of the combustion chamber,
- Fig. 1b: shows schematically a second traditional, popular and industrially proven arrangement for sulfur combustion, comprising a horizontal brick-lined combustion chamber (4), laterally connected to the waste heat boiler (6).
- Fig. 1c: shows schematically a third traditional and industrially proven arrangement for sulfur combustion, comprising 2 or more horizontal brick-lined combustion chambers (4) and a single central vertical brick-lined collection chamber (4') connected to the waste heat boiler (6),
- Fig. 2a: shows schematically a first embodiment for sulfur combustion with a burner arrangement according to the invention, without separate combustion chamber, whereas the oxygen supply for the combustion of the sulphur can be either air or oxygen enriched air,
- Fig. 2b: shows schematically a second embodiment for sulfur combustion with a burner arrangement according to the invention, without separate combustion chamber, whereas either oxygen enriched air or pure oxygen is used, so that with this arrangement and by recirculation of gas cooled at the waste heat boiler (6) and subsequent further cooling in a heat exchanger e.g. an economizer (11), a very high SO₂ concentration of the gas can be achieved, up to 100 %-vol.,
- Fig. 2c: shows schematically a third embodiment for sulfur combustion, with a burner arrangement according to the invention, without separate combustion chamber, enabling the sulphur combustion to be sub-stoichiometric with regard to oxygen and hence resulting low NOx generation, whereby non-oxidized S₂-gas containing combustion product is cooled at the waste heat boiler (6) to typically 550°C, prior to addition of an appropriate amount of oxygen (air or enriched air) for completion of the oxidation of the residual S₂-gas, followed by an additional heat exchanger, e.g. boiler element.
- Fig. 2d: shows schematically a fifth embodiment for sulfur combustion, with a burner arrangement according to the invention, without separate combustion chamber, whereas the sulphur burners (2, 2") are arranged for a 2-stage combustion with intermediate cooling of the first (lower) combustion gas by a waste heat boiler (6) and and final cooling (15) of the gas following the second (upper) sulphur combustion. Again, oxygen supply can be via air or oxygen enriched air.
- Fig. 3: shows schematically the burner arrangement according to the invention, in this instance arranged at a cylindrical reactor shape.

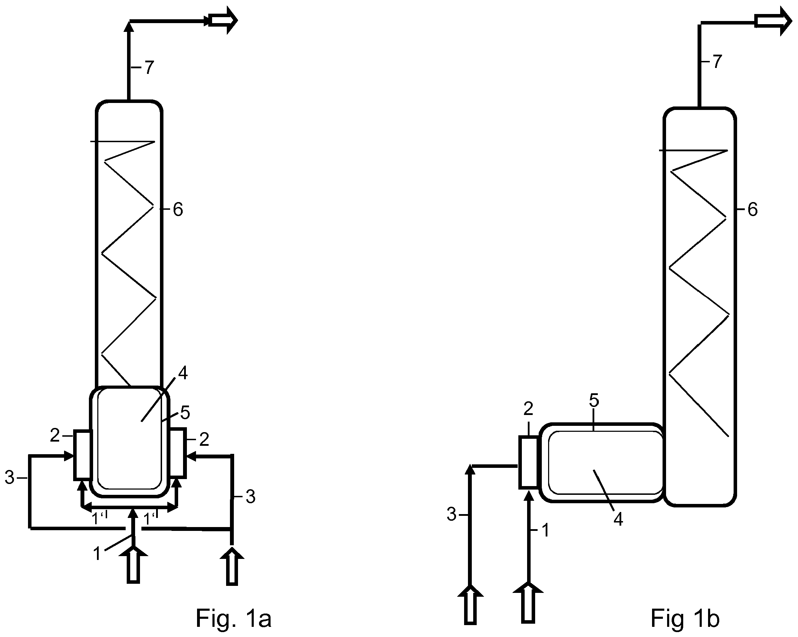

Figure 1a shows a possible design of a reactor for sulfur combustion. Liquid sulfur is introduced into the burner 2 via lines 1, 1'. An oxygen-like gas, often air, is fed into the burners 2 via lines 3. 3'. This sulfur is burnt in a vertical combustion chamber 4, which has a brick lining of 5.

The resulting heat is then conducted in a heat exchanger 6. The resulting sulfur dioxide is discharged with a line 7.

Figure 1b essentially corresponds to this design, whereby the horizontal combustion chamber 4 is arranged here lateral to the waste heat boiler heat exchanger 6.

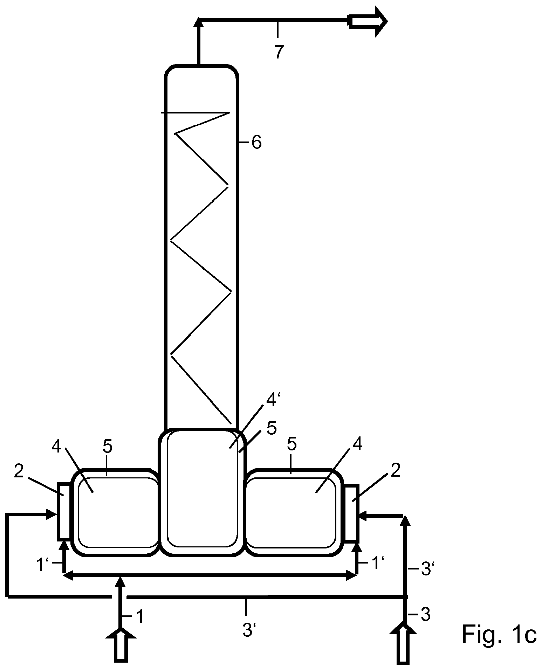

Figure 1c shows an arrangement with a central vertical collection chamber 4' and two horizontal combustion chambers 4 arranged symmetrically to it, followed by the waste heat boiler 6

Contrary to the above, subject of this invention is the omission of a separate sulfur combustion furnace or chamber, while the burner(s) are directly firing into the lower empty part of the membrane wall water tube boiler. Said empty lower part of the waste heat boiler being the radiation chamber (high temperature), whereas the upper part of the boiler contains the convection part.

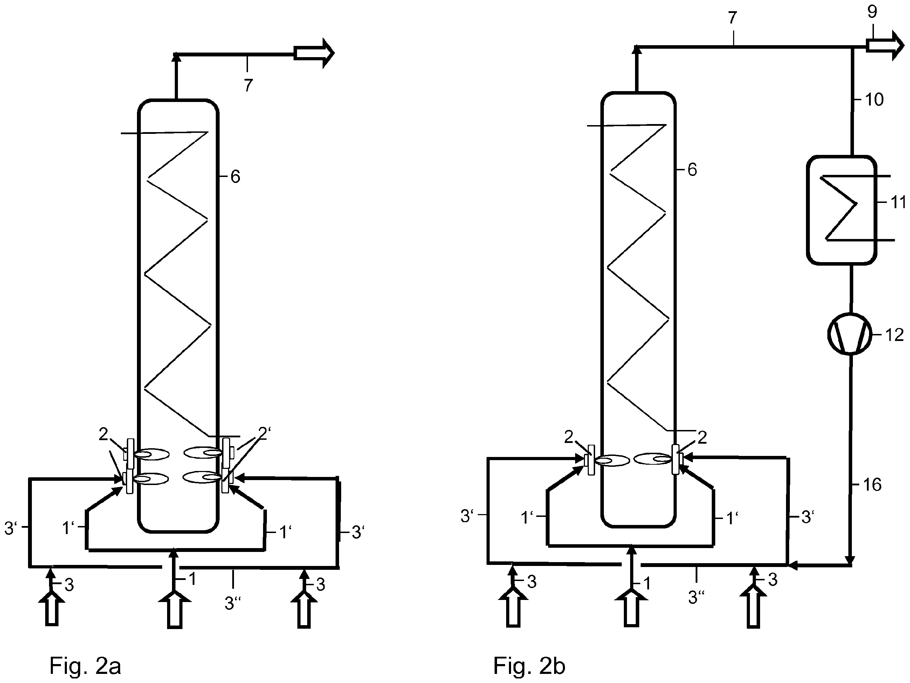

Figure 2a shows a somehow more complex structure that can only be achieved by adjusting the burners 2 in accordance with the invention. Again, sulfur is fed to the burners 2 via line 1, 1' and air or oxygen enriched air via line 3, 3'.

The decisive factor is that no brick-lined combustion chamber 4 can be found here, but the burners 2 are arranged in the same housing as the waste heat boiler and its associated heat exchangers.

This design essentially corresponds to that of Figure 2b, where parts of the resulting sulfur dioxide are first fed via line 7 and line 10 to a heat exchanger 11 and then to a compressor 12, before they are recirculated via line 16 in lines 3' and 3'. Such a recirculation of cooled gas can be used in order to achieve even higher SO₂ concentrations, -up to 100 %-vol.

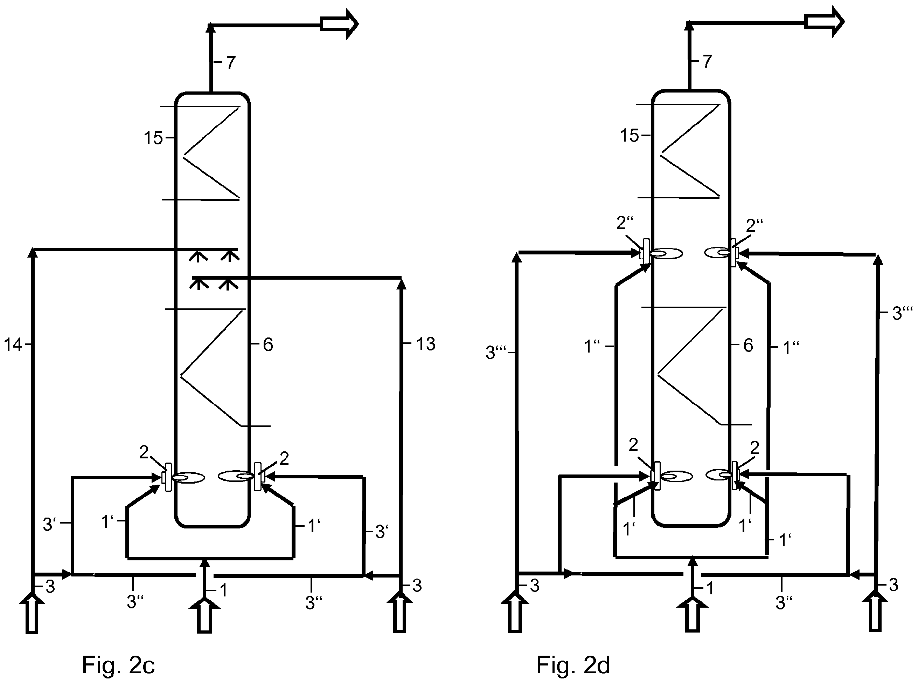

Figure 2c shows a structure in which air or oxygen-enriched air is introduced into the system via lines 13 and 14 above the first heat exchanger 6, which then completes the combustion. A second heat exchanger 15 is located above this said gas/air input. Said 2-stage combustion is therefore proposed, arranged in the same full-length membrane casing. Sub-stoichiometric combustion with oxygen deficiency does apply to the lower sulfur burner(s) 2, resulting in SO₂ containing gas which also contains gaseous un-burned sulfur S₂ which is typically cooled down to 550 to 700 °C at the heat exchanger 6, prior to the addition of the said air/oxygen enriched air.. By addition of the said air, the said S₂ gas is subsequently fully oxidized to SO₂. So, not only the combustion temperature at the first combustion stage be kept comparatively low, but the formation of NOx is also prevented/reduced due to the limited oxygen content.

Figure 2d alternatively shows the arrangement of two further burners 2" and corresponding sulfur supply lines 1". Thus, both combustion temperatures, i.e. first and second stage can be kept at a lower level and both, low NOx figures can be achieved as well as higher SO₂ concentrations of the total combustion gas.

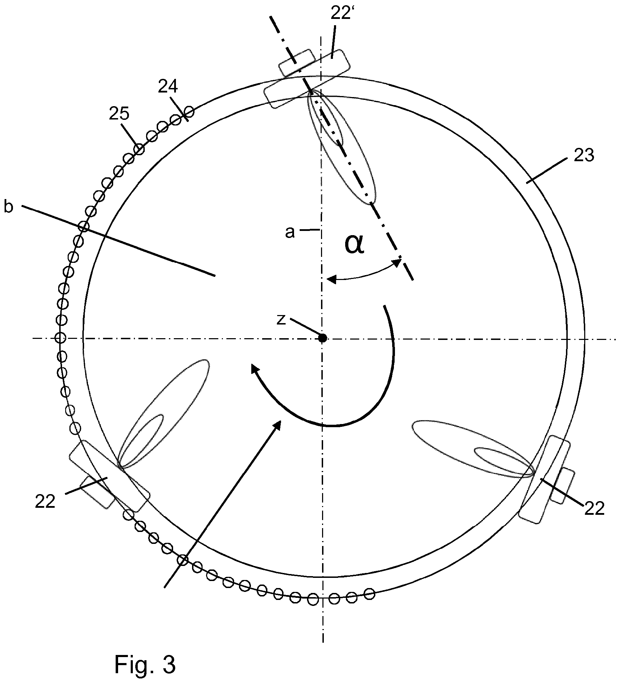

Figure 3 shows a burner arrangement according to the invention. The burner walls 23 form a base area with a center point z. The burner holding devices 22 are mounted on the wall(s) 23, whereby each burner 22 is mounted at the same distance from all other burners 22.

The central axis a is defined as the shortest connection from a burner mounting device 22 to the center point z. At least one of the burner holding device 22 is arranged such that the burner flame describes an angle α to the axis during operation.

At least parts of the reactor wall(s) 23 is/are equipped with tubes 25 as membrane wall 24.

This arrangement causes the entire combustion air and combustion gas to move/swirl in a circle, thus improving the mixing of the gas and uniformity of the flow when entering the downstream convection part. As a result, heat transfer in an area next to the burners 2 is dominated by radiation while above/downstream said radiation area a convection zone is established.

The angle of obliquity α can vary from zero or a few degrees to a substantial figure, e.g. 15°. Obviously, this concept can be applied to all other shapes of membrane walls.

### List of Reference Numerals

- 1, 1', 1": line
- 2, 2', 2‴: burner
- 3, 3', 3", 3‴: line
- 4, 4': combustion chamber
- 5: burner
- 6: heat exchanger
- 7: line
- 9, 10: line
- 11: heat exchanger
- 12: compressor
- 13, 14: line
- 15: heat exchanger
- 16: line
- 22, 22': burner holding device
- 23: reactor wall
- 24: membrane wall
- 25: tubes

- a: center line
- b: base area
- z: center point
- α: angle

## Claims

1. A reactor for the combustion of sulfur whereby the reactor's walls (23) form a symmetrical base area b, whereby at least two burners (2, 2') are mounted each with a burner holding device (22), whereby all burner holding devices (22) have the same distance to each other and each burner holding device (22) has the same distance to the a center point z of the base area b, **characterized in that** at least one burner holding device (22') is arranged such that during operation the flame of said burner (2') shows an angle α between 0 and 45° to a center axis a, which is defined as the shortest connection between this burner holding device (22') and the center point z.

2. Reactor according to claim 1, **characterized in that** the base area b is a square or a circle.

3. Reactor according to one of the preceding claims, **characterized in that** the base area b is a polygon with at least six sides and the number of sides is a multiple of the number of burners (2, 2').

4. Reactor according to one of the preceding claims, **characterized in that** at least three burners (2, 2') are provided.

5. Reactor according to one of the preceding claims, **characterized in that** the reactor features a first zone wherein heat is transferred via radiation and a second zone wherein heat is transferred via convection at a waste heat boiler.

6. Reactor according to one of the preceding claims, **characterized in that** the walls are designed at least partially as membrane walls (24).

7. Reactor according to one of the preceding claims, **characterized in that** the reactor feature two heat exchangers (6, 15) and that between the two heat exchangers (6, 15) additional oxygen is introduced or additional burners (2") are positioned.

8. Reactor according to one of the preceding claims, **characterized in that** at least one control unit is provided which, on the basis of the measured temperatures, adjusts the burner holding device (22') within the angle α in such a way that the heat profile is as homogeneous as possible, this adjustment being carried out on the basis of a stored experimentally determined matrix.

9. Process for the combustion of sulfur, wherein sulfur is burned in at least two burners, these burners being mounted on the walls of a combustion chamber, which describes a symmetrical ground plan and wherein the distance between each burner is identical, **characterized in that** at least one burner is arranged with respect to its flame direction such that it has an angle α between 0 and 45° to the axis a of the shortest connection between burner holding device and center point z of a base area b defined by the walls of the combustion chamber.

## Patentansprüche

1. Reaktor zur Verbrennung von Schwefel, wobei die Wände (23) des Reaktors eine symmetrische Grundfläche b bilden, wobei mindestens zwei Brenner (2, 2') mit jeweils einer Brennerhalterung (22) angebracht sind, wobei alle Brennerhalterungen (22) den gleichen Abstand zueinander und jede Brennerhalterung (22) den gleichen Abstand zu einem Mittelpunkt z der Grundfläche b haben, **dadurch gekennzeichnet, dass** mindestens eine Brennerhaltevorrichtung (22') so angeordnet ist, dass die Flamme dieses Brenners (2') im Betrieb einen Winkel α zwischen 0 und 45° zu einer Mittelachse a aufweist, die als kürzeste Verbindung zwischen dieser Brennerhaltevorrichtung (22') und dem Mittelpunkt z definiert ist.

2. Reaktor nach Anspruch 1, **dadurch gekennzeichnet, dass** die Grundfläche b ein Quadrat oder ein Kreis ist.

3. Reaktor nach einem der vorhergehenden Ansprüche, **dadurch gekennzeichnet, dass** die Grundfläche b ein Vieleck mit mindestens sechs Seiten ist und die Anzahl der Seiten ein Vielfaches der Anzahl der Brenner (2, 2') ist.

4. Reaktor nach einem der vorhergehenden Ansprüche, **dadurch gekennzeichnet, dass** mindestens drei Brenner (2, 2') vorgesehen sind.

5. Reaktor nach einem der vorhergehenden Ansprüche, **dadurch gekennzeichnet, dass** der Reaktor eine erste Zone, in der Wärme durch Strahlung übertragen wird, und eine zweite Zone, in der Wärme durch Konvektion übertragen, an einen Abhitzekessel übertragen wird, aufweist.

6. Reaktor nach einem der vorhergehenden Ansprüche, **dadurch gekennzeichnet, dass** die Wände zumindest teilweise als Membranwände (24) ausgebildet sind.

7. Reaktor nach einem der vorhergehenden Ansprüche, **dadurch gekennzeichnet, dass** der Reaktor zwei Wärmetauscher (6, 15) aufweist und dass zwischen den beiden Wärmetauschern (6, 15) zusätzlicher Sauerstoff eingebracht wird oder zusätzliche Brenner (2") angeordnet sind.

8. Reaktor nach einem der vorhergehenden Ansprüche, **dadurch gekennzeichnet, dass** mindestens eine Regeleinheit vorgesehen ist, die aufgrund der gemessenen Temperaturen die Brennerhaltevorrichtung (22') innerhalb des Winkels α so einstellt, dass ein möglichst homogenes Wärmeprofil entsteht, wobei diese Einstellung auf der Basis einer hinterlegten experimentell ermittelten Matrix erfolgt.

9. Verfahren zur Verbrennung von Schwefel, bei dem Schwefel in mindestens zwei Brennern verbrannt wird, wobei diese Brenner an den Wänden einer Brennkammer angebracht sind, die einen symmetrischen Grundfläche beschreibt und bei der der Abstand zwischen jedem Brenner gleich ist, **dadurch gekennzeichnet, dass** mindestens ein Brenner bezüglich seiner Flammenrichtung so angeordnet wird, dass er einen Winkel α zwischen 0 und 45° zur Achse a der kürzesten Verbindung zwischen Brennerhalterung und Mittelpunkt z einer durch die Wände der Brennkammer definierten Grundfläche b aufweist.

## Revendications

1. Réacteur destiné à la combustion de soufre moyennant quoi les parois du réacteur (23) forment une zone de base symétrique b, moyennant quoi au moins deux brûleurs (2, 2') sont montés chacun avec un dispositif de maintien de brûleur (22), moyennant quoi tous les dispositifs de maintien de brûleur (22) ont la même distance les uns par rapport aux autres et chaque dispositif de maintien de brûleur (22) a la même distance au point central z de la zone de base b, **caractérisé en ce qu'**au moins un dispositif de maintien de brûleur (22') est agencé de telle sorte que pendant son fonctionnement la flamme dudit brûleur (2') présente un angle α compris entre 0 et 45° par rapport à un axe central a, qui est défini comme étant la connexion la plus courte entre ce dispositif de maintien de brûleur (22') et le point central z.

2. Réacteur selon la revendication 1, **caractérisé en ce que** la zone de base b est un carré un cercle.

3. Réacteur selon l'une quelconque des revendications précédentes, **caractérisé en ce que** la zone de base b est un polygone avec au moins six côtés et le nombre de côtés est un multiple du nombre de brûleurs (2, 2').

4. Réacteur selon l'une quelconque des revendications précédentes, **caractérisé en ce qu'**au moins trois brûleurs (2, 2') sont installés.

5. Réacteur selon l'une quelconque des revendications précédentes, **caractérisé en ce que** le réacteur présente une première zone dans laquelle de la chaleur est transférée par l'intermédiaire d'un rayonnement et une deuxième zone dans laquelle de la chaleur est transférée par convection au niveau d'une chaudière de récupération de chaleur.

6. Réacteur selon l'une quelconque des revendications précédentes, **caractérisé en ce que** les parois sont conçues au moins partiellement comme des parois membranaires (24).

7. Réacteur selon l'une quelconque des revendications précédentes, **caractérisé en ce que** le réacteur présente deux échangeurs de chaleur (6, 15) et **en ce qu'**entre les deux échangeurs de chaleur (6, 15) de l'oxygène supplémentaire est introduit ou des brûleurs supplémentaires (2") sont positionnés.

8. Réacteur selon l'une quelconque des revendications précédentes, **caractérisé en ce qu'**au moins une unité de commande est installée qui, sur la base des températures mesurées, ajuste le dispositif de maintien de brûleur (22') à l'intérieur de l'angle α d'une façon telle que le profil thermique est aussi homogène que possible, ce réglage étant effectué sur la base d'une matrice stockée déterminée de manière expérimentale.

9. Procédé destiné à la combustion de soufre, dans lequel du soufre est brûlé dans au moins deux brûleurs, ces brûleurs étant montés sur les parois d'une chambre de combustion, qui décrit un plan de masse symétrique et dans lequel la distance entre chaque brûleur est identique, **caractérisé en ce qu'**au moins un brûleur est agencé par rapport à sa direction de flamme de telle sorte qu'il présente un angle α compris entre 0 et 45° par rapport à l'axe a de la connexion la plus courte entre un dispositif de maintien de brûleur et le point central z d'une zone de base b définie par les parois de la chambre de combustion.
